# EUROPEAN PATENT APPLICATION

(11) **EP 1 791 271 A1**
(43) Date of publication of application: **30.05.2007**
(21) Application number: 05766171.2
(22) Date of filing: 20.07.2005
(51) Int. Cl.: H04B 7/26, H04B 1/707

(54) **COMMUNICATION CONTROL METHOD, MOBILE COMMUNICATION SYSTEM, BASE STATION, AND CIRCUIT CONTROL STATION**

(30) Priority: 17.09.2004 JP 2004271487
(71) Applicant: NEC Corporation, Minato-ku Tokyo 108-8001 (JP)
(72) Inventor: ISHII, Naoto c/o NEC Corporation, Tokyo 1088001 (JP)
(74) Representative: Vossius & Partner
(86) International application number: PCT/JP2005/013279
(87) International publication number: WO 2006/030582

(57) **Abstract**

When a request is submitted from a base station (2) to a radio network controller (1) for S-CPICH for use as a phase reference, the S-CPICH are set in the radio network controller (1) in accordance with the request from the base station (2) and the set S-CPICH are reported to the base station (2) and mobile stations (3). In the base station (2), the antenna beams of the S-CPICH that were reported from the radio network controller (1) are used to transmit and receive data, and in the mobile stations (3), the S-CPICH that were reported from the radio network controller (1) are used as a phase reference to demodulate data that are transmitted in from the base station (2).

## Description

### Technical Field

The present invention relates to a communication control method, a mobile communication system, a base station, and a radio network controller, and more particularly to a communication control method, a mobile communication system, a base station, and a radio network controller that use the CDMA (Code Division Multiple Access) cellular mode.

### Background Art

In the down links of a mobile communication system of the prior art that employs direct-sequence spread-spectrum code division multiple access, physical channels referred to as "phase reference" were necessary in mobile stations for demodulating data that were transmitted in from a base station. In mobile stations, these physical channels were used as reference phase information to estimate the amount of correction required for correcting fluctuation in the communication path (fading).

For example, in W-CDMA (Wide-band Code Division Multiple Access), which is the next-generation mobile communication system, P-CPICH (Primary Common Pilot Channel), which is a common physical channel, is principally used as the phase reference. Alternatively, an S-CPICH (Secondary Common Pilot Channel) or the pilot symbols of a dedicated physical channel (dedicated pilot) can also be used as a phase reference. However, S-CPICH can be used as a phase reference only in cases in which its use as a phase reference has been permitted by the radio network controller. A dedicated pilot can always be used as a phase reference. This method of use of a phase reference is disclosed in, for example, 3GPP (3^{rd} Generation Partnership Project) Technical Specifications TS 25.331 v5.1.0 (2002-06).

However, in "beam-forming" in which a base station (BS) uses an adaptive antenna to transmit data to and receive data from a mobile station, signals from other mobile stations can be eliminated or suppressed by means of an antenna beam in data reception on uplink lines to enable an improvement in reception quality. In addition, the limitation of the data transmission region through the use of an antenna beam enables a reduction of inter-cell interference from other mobile stations in neighboring cells and multipath interference from other mobile stations within the same cell in data transmission on down links, and as a result, can also be expected to improve the reception quality at mobile stations. An adaptive antenna is also adopted in a mobile communication system that uses the above-described direct-sequence spread-spectrum code division multiple access (for example, refer to JP-A-1999-266228). The principles of the operation of an adaptive antenna are disclosed in "Adaptive arrays and mobile communication 'I'" in the Journal of the IEICE (Institute of Electronics, Information and Communication Engineers), Vol. 81, No. 12, pp. 1254-1260 (December 1998).

When this type of beam forming is applied, a physical channel that represents the propagation path after beam-forming is preferably used as the phase reference. This preference is founded on the consideration that propagation characteristics that differ from P-CPICH that is uniformly transmitted within a cell occur in phase fluctuation due to antenna directivity in a mobile station that receives signals after beam-forming. Accordingly, in a mobile station that is connected to a base station in which beam-forming is applied, a dedicated pilot or S-CPICH that can be transmitted for each antenna beam must be applied as the phase reference instead of P-CPICH.

A technique is here considered for reporting, from the base station to mobile stations, a pilot channel that is transmitted with the same directivity as the data channel (for example, JP-A-1999-252002). In this technique, a pilot channel that is transmitted in together with data can be used at mobile stations.

When S-GPIGH is applied as the phase reference as described hereinabove, instructions for using S-CPICH as the phase reference must be supplied from the radio network controller to the mobile stations, but currently, information relating to the phase reference cannot be exchanged between the base station and the radio network controller. Thus, although instructions for using S-CPICH as the phase reference can be supplied to the mobile stations from the radio network controller, information that instructions regarding which code to use as S-CPICH have been supplied from the radio network controller to mobile stations cannot be recognized in the base station.

The problem therefore arises that beam-forming cannot be applied to S-CPICH in a base station, and further, that S-CPICH cannot be used as a phase reference in a mobile station that has received data that have been transmitted by applying beam-forming.

As an additional problem, a mobile station must determine whether or not the base station to which it is connected is applying beam-forming in order to use a dedicated pilot as phase reference when beam-forming is applied, but because this information is not currently reported from the radio network controller to mobile stations, a mobile station is unable to switch phase reference from P-CPICH to a dedicated pilot according to whether the base station to which it is connected is applying beam-forming.

### Disclosure of the Invention

It is an object of the present invention to provide a communication control method, a mobile communication system, a base station, and a radio network controller that enable the use, as phase reference, of S-CPICH that has received communication path fluctuation identical to the communicated data in a mobile station that is communicating with a base station that is applying an adaptive antenna.

It is another object of the present invention to provide a communication control method, a mobile communication system, a base station, and a radio network controller that enable the application of a dedicated pilot as phase reference in a mobile station when the base station is not transmitting S-CPICH as phase reference in a mobile communication system that is communicating with a base station that is applying an adaptive antenna.

The present invention for achieving the above-described object is a communication control method in a mobile communication system that is composed of a base station that transmits and receives data by means of an adaptive antenna having a plurality of antenna beams, a mobile station that transmits data to and receives data from the base station, and a radio network controller that controls radio links of the mobile station; the communication control method including steps of:
submitting a request from the base station to the radio network controller for a common pilot channel that is transmitted on each of the plurality of antenna beams for use as reference phase information;
setting the common pilot channels in the radio network controller in accordance with the request from the base station and reporting the common pilot channels to the base station and the mobile station; and
using the common pilot channel that has been reported from the radio network controller as the reference phase information to demodulate data that have been transmitted in from the base station in the mobile station.

The communication control method further includes steps of:
reporting the number of the plurality of antenna beams from the base station to the radio network controller;
in the radio network controller, assigning a number of the common pilot channels equal to the number the antenna beams that is reported from the base station and reporting the common pilot channels from the radio network controller to the base station;
selecting from among the plurality of common pilot channels that were reported from the radio network controller the optimum common pilot channel for a mobile station that transmits and receives data, and both transmitting data to the mobile station by the same antenna beam as the antenna beam that transmits the common pilot channel and reporting the common pilot channel from the base station to the mobile station by way of the radio network controller; and
using the common pilot channel that has been reported from the base station by way of the radio network controller as the reference phase information to demodulate data in the mobile station that have been transmitted in from the base station.

The communication control method further includes steps of:
in the base station, detecting the reception timing of the optimum common pilot channel for the mobile station based on the position of the mobile station, and both transmitting data to the mobile station by the same antenna beam as the antenna beam that is transmitted at the reception timing and reporting the reception timing from the base station by way of the radio network controller to the mobile station; and
using the common pilot channel that is based on the reception timing reported from the base station by way of the radio network controller as the reference phase information to demodulate, in the mobile station, data that have been transmitted in from the base station.

In addition, the communication control method further includes steps of:
reporting the number of the plurality of antenna beams from the base station to the radio network controller;
in the radio network controller, assigning a number of the common pilot channels equal to the number of antenna beams reported from the base station and reporting these common pilot channels from the radio network controller to the base station;
transmitting data from the base station to the mobile station by the same antenna beam as the antenna beam that is transmitting the plurality of common pilot channels reported from the radio network controller;
in the mobile station, selecting from among the plurality of common pilot channels transmitted from the base station the common pilot channel having the best reception quality and both reporting this common pilot channel to the base station and setting this common pilot channel as the reference phase information; and
using the antenna beam that is transmitting the common pilot channel that is reported from the mobile station to transmit data from the base station to the mobile station.

Further, the communication control method of the present invention is a communication control method in a mobile communication system composed of a base station that transmits data to and receives data from mobile stations by means of an adaptive antenna having an antenna beam for each of the mobile stations and a radio network controller for controlling radio links of the mobile stations, the communication control method including steps of:
submitting a request from the base station to the radio network controller for common pilot channels that are transmitted on each of the antenna beams for use as reference phase information;
in the radio network controller, setting the common pilot channels for each of the mobile stations according to the request from the base station and reporting the common pilot channels to the base station and the mobile stations; and
in the mobile stations, using the common pilot channel that has been reported from the radio network controller as the reference phase information to demodulate data that have been transmitted in from the base station.

In addition, the communication control method of the present invention is a communication control method in a mobile communication system composed of a base station that transmits and receives data by means of an adaptive antenna having a plurality of antenna beams, mobile stations that transmit data to and receive data from the base station, and a radio network controller for controlling radio links of the mobile stations, the communication control method including steps of:
reporting to the radio network controller that an adaptive antenna is being used in the base station;
instructing from said radio network controller to the mobile stations that a dedicated pilot channel is to be set as the reference phase information; and
in the mobile stations, setting the dedicated pilot channel as the reference phase information in accordance with the instructions from the radio network controller and using the dedicated pilot channel as the reference phase information to demodulate data that have been transmitted in from the base station.

The communication control method of the present invention is a communication control method in a mobile communication system composed of a base station that transmits data to and receives data from mobile stations by means of an adaptive antenna having antenna beams for each of the mobile stations, and a radio network controller for controlling radio links of the mobile stations, the communication control method including steps of:
reporting to the radio network controller that an adaptive antenna is being used in the base station;
instructing the mobile stations from the radio network controller that a dedicated pilot channel is to be set as the reference phase information; and
in the mobile stations, setting the dedicated pilot channel as the reference phase information in accordance with the instructions from the radio network controller and using the dedicated pilot channel as the reference phase information to demodulate data that have been transmitted in from the base station.

In addition, in a mobile communication system that is made up from: a base station that transmits and receives data by means of an adaptive antenna having a plurality of antenna beams, mobile stations that transmit data to and receive data from the base station, and a radio network controller for controlling radio links of the mobile stations; wherein:
the base station submits a request to the radio network controller for common pilot channels that are transmitted on each of the plurality of antenna beams for use as reference phase information;
the radio network controller sets the common pilot channel in accordance with the request from the base station and reports the common pilot channel to the base station and the mobile stations; and
the mobile stations use the common pilot channel that has been reported from the radio network controller as reference phase information to demodulate data that have been transmitted in from the base station.

In addition, in the mobile communication system of the present invention, the radio network controller assigns a number of the common pilot channels equal to the number of antenna beams that is reported from the base station and reports these common pilot channels to the base station;
the base station selects from among the plurality of common pilot channels that have been reported from the radio network controller the optimum common pilot channel with a mobile station that transmits and receives data, and both transmits data to the mobile station by the same antenna beam as the antenna beam that is transmitting the common pilot channel and reports the common pilot channel to the mobile station by way of the radio network controller; and
the mobile station uses the common pilot channel that is reported from the base station by way of the radio network controller as the reference phase information to demodulate data that have been transmitted in from the base station.

In addition, in the mobile communication system of the present invention, the base station detects the reception timing of the optimum common pilot channel for the mobile station from the position of the mobile station, and both transmits data to the mobile station by the same antenna beam as the antenna beam that is transmitting at the reception timing and reports the reception timing to the mobile station by way of the radio network controller; and
the mobile station uses the common pilot channel that is based on the reception timing reported from the base station by way of the radio network controller as the reference phase information to demodulate the data that have been transmitted in from the base station.

In addition, in the mobile communication system of the present invention, the radio network controller assigns a number of the common pilot channels equal to the number of the antenna beams reported from the base station and reports these common pilot channels to the base station;
the base station transmits data to the mobile station by the same antenna beam as the antenna beam that is transmitting the plurality of common pilot channels reported from the radio network controller;
the mobile station selects from among the plurality of common pilot channels that are transmitted from the base station the common pilot channel having the best reception quality and both reports the common pilot channel to the base station and sets the common pilot channel as the reference phase information; and
the base station uses the antenna beam that is transmitting the common pilot channel that was reported from the mobile station to transmit data to the mobile station.

In addition, in a mobile communication system that includes mobile stations, a base station that transmits data to and receives data from the mobile stations by means of an adaptive antenna having an antenna beam for each mobile station, and a radio network controller for controlling the radio links of the mobile stations:
the base station submits a request to the radio network controller for common pilot channels that are transmitted on each of the antenna beams for use as reference phase information;
the radio network controller sets the common pilot channels for each of the mobile stations in accordance with the request from the base station and reports the common pilot channels to the base station and the mobile stations; and
the mobile stations use the common pilot channels that are reported from the radio network controller as the reference phase information to demodulate data that have been transmitted in from the base station.

Further, in a mobile communication system that includes a base station that transmits and receives data by means of an adaptive antenna having a plurality of antenna beams, mobile stations that transmit data to and receive data from the base station, and a radio network controller for controlling the radio links of the mobile stations:
the base station reports to the radio network controller that it is using an adaptive antenna;
the radio network controller instructs the mobile stations to set a dedicated pilot channel as the reference phase information; and
the mobile stations set the dedicated pilot channel as the reference phase information in accordance with the instructions from the radio network controller and use the dedicated pilot channel as the reference phase information to demodulate data that are transmitted in from the base station.

Further, in a mobile communication system that includes mobile stations, a base station that transmits data to and receives data from the mobile stations by means of an adaptive antenna having antenna beams for each of the mobile stations, and a radio network controller for controlling the radio links of the mobile stations:
the base station reports to the radio network controller that it is applying an adaptive antenna;
the radio network controller instructs the mobile stations to set a dedicated pilot channel as the reference phase information; and
the mobile stations set the dedicated pilot channel as the reference phase information in accordance with the instructions from the radio network controller and use the dedicated pilot channel as the reference phase information to demodulate data that are transmitted in from the base station.

In the present invention that is of the above-described configuration, when a request for common pilot channels, which are transmitted for each of a plurality of antenna beams for use as reference phase information, is submitted from a base station to a radio network controller, the radio network controller sets the common pilot channels in accordance with the request from the base station and reports the common pilot channels that have been set to the base station and the mobile stations. The base station uses the antenna beams that transmit the common pilot channels that have been reported from the radio network controller to transmit and receive data, and the common pilot channels that have been reported from the radio network controller are used as reference phase information in the mobile stations to demodulate data that are transmitted in from the base station.

The present invention enables the use of S-CPICH, which is a common pilot channel transmitted for each antenna beam and that receives the same communication path fluctuation as the communication data, as a phase reference, which is reference phase information, in mobile stations that communicate with a base station that applies an adaptive antenna.

In addition, when the base station is not transmitting S-CPICH, which is a common pilot channel transmitted for each antenna beam, as a phase reference, which is reference phase information, the present invention enables the use of a dedicated pilot channel as the phase reference in the mobile stations.

### Brief Description of the Drawings

FIG. 1 shows an embodiment of the mobile communication system of the present invention;
FIG. 2 shows the configuration in the first embodiment of the base station shown in FIG. 1;
FIG. 3 shows the configuration in the first embodiment of a mobile station shown in FIG. 1;
FIG. 4 is a flow chart for explaining the operation of a mobile station in the first embodiment of the mobile communication system shown in FIG. 1;
FIG. 5 is a flow chart for explaining the operation at the time of initial setting of the base station in the first embodiment of the mobile communication system shown in FIG. 1;
FIG. 6 is a flow chart for explaining the operation during the normal state of the base station in the first embodiment of the mobile communication system shown in FIG. 1;
FIG. 7 is a flow chart for explaining the operation of the line controller in the first embodiment of the mobile communication system shown in FIG. 1;
FIG. 8 is a sequence chart for explaining the flow of control signals in the first embodiment of the mobile communication system shown in FIG. 1;
FIG. 9 shows the configuration in the second embodiment of the base station shown in FIG. 1;
FIG. 10 is a flow chart for explaining the operation of a mobile station in the second embodiment of the mobile communication system shown in FIG. 1;
FIG. 11 is a flow chart for explaining the operation of the base station in the second embodiment of the mobile communication system shown in FIG. 1;
FIG. 12 is a flow chart for explaining the operation of the line controller in the second embodiment of the mobile communication system shown in FIG. 1;
FIG. 13 is a sequence chart for explaining the flow of control signals in the second embodiment of the mobile communication system shown in FIG. 1;
FIG. 14 shows the configuration in the third embodiment of the base station shown in FIG. 1;
FIG. 15 shows the configuration in the third embodiment of the mobile station shown in FIG. 1;
FIG. 16 is a flow chart for explaining the operation of the mobile station in the third embodiment of the mobile communication system shown in FIG. 1;
FIG. 17 is a flow chart for explaining the operation during initial setting of the base station in the third embodiment of the mobile communication system shown in FIG. 1;
FIG. 18 is a flow chart for explaining the operation during normal state of the base station in the third embodiment of the mobile communication system shown in FIG. 1;
FIG. 19 is a flow chart for explaining the operation of the line controller in the third embodiment of the mobile communication system shown in FIG. 1;
FIG. 20 is a sequence chart for explaining the flow of control signals in the third embodiment of the mobile communication system shown in FIG. 1;
FIG. 21 shows another embodiment of the mobile communication system of the present invention;
FIG. 22 shows the configuration in the fourth embodiment of the base station shown in FIG. 21;
FIG. 23 is a flow chart for explaining the operation of the mobile station in the fourth embodiment of the mobile communication system shown in FIG. 21;
FIG. 24 is a flow chart for explaining the operation of the base station in the fourth embodiment of the mobile communication system shown in FIG. 21;
FIG. 25 is a flow chart for explaining the operation of the line controller in the fourth embodiment of the mobile communication system shown in FIG. 21;
FIG. 26 is a sequence chart for explaining the flow of control signals in the fourth embodiment of the mobile communication system shown in FIG. 21;
FIG. 27 is a flow chart for explaining the operation of the mobile station in the mobile communication system shown in FIG. 1 for the case of a configuration in which the S-CPICH generation unit is eliminated from the configuration of the base station shown in FIG. 2 and the base station does not transmit S-CPICH;
FIG. 28 is a flow chart for explaining the operation of a base station in the mobile communication system shown in FIG. 1 for a case of a configuration in which the S-CPICH generation unit is eliminated from the configuration of the base station shown in FIG. 2 and the base station does not transmit S-CPICH; and
FIG. 29 is a flow chart for explaining the operation of a line controller in the mobile communication system shown in FIG. 1 for the case of a configuration in which the S-CPICH generation unit is eliminated from the configuration of the base station shown in FIG. 2 and the base station does not transmit S-CPICH.

### Best Mode for Carrying Out the Invention

### First Embodiment

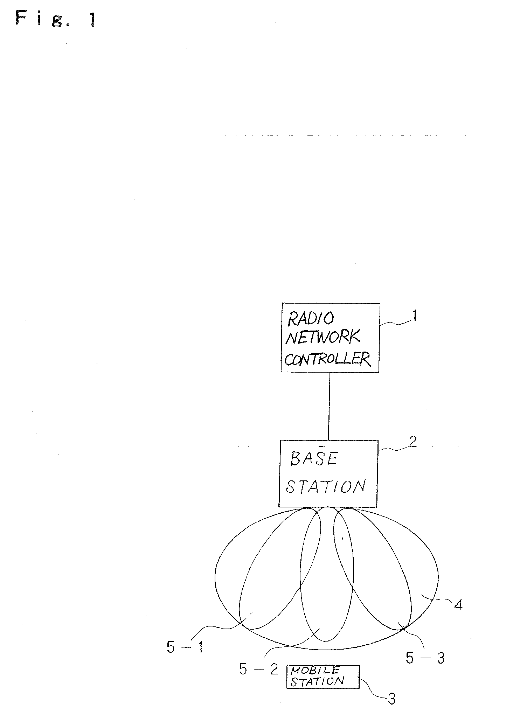

FIG. 1 shows an embodiment of the mobile communication system of the present invention.

As shown in FIG. 1, the present embodiment is composed of radio network controller 1, base station 2, and mobile station 3, and uses direct-sequence spread-spectrum code division multiple access as the mode of radio access. When data transmitted to mobile station 3 arrive in base station 2 from the network by way of radio network controller 1, the data that have arrived by way of radio network controller 1 are transmitted from base station 2 to mobile station 3 by a downlink dedicated physical data channel (DL-DPDCH). In addition, the data are transmitted from mobile station 3 to base station 2 by means of an uplink dedicated physical data channel (UL-DPDCH). In base station 2, a downlink dedicated physical control channel (DL-DPCCH) and an uplink dedicated physical control channel (UL-DPCCH) are further used for the exchange of line control signals with mobile station 3.

Radio network controller 1 controls the radio links of mobile station 3, and further, sets the control lines for exchanging line control signals between base station 2 and mobile station 3. Radio network controller 1 further has the functions of transmitting user data to and receiving user data from base station 2 by way of a wired line, and of assigning S-CPICH according to requests from base station 2 and reporting the assigned S-CPICH to base station 2 and mobile station 3.

Base station 2 uses nondirectional antenna pattern 4 to uniformly transmit a first downlink common pilot channel (P-CPICH) to mobile stations 3 within the same cell. Base station 2 further has a plurality of antenna beams 5-1-5-3 that divide the cell, and transmits second downlink common pilot channels (S-CPICH) that differ for each of these antenna beams 5-1-5-3. Although there are three antenna beams in this embodiment, the present invention is not limited to this number of antenna beams. In addition, upon receiving data from radio network controller 1, base station 2 selects one antenna beam from among the plurality of antenna beams 5-1-5-3 according to mobile station 3 and uses the selected antenna beam to transmit received data and control signals to mobile station 3 by means of DL-DPDCH and DL-DPCCH, respectively.

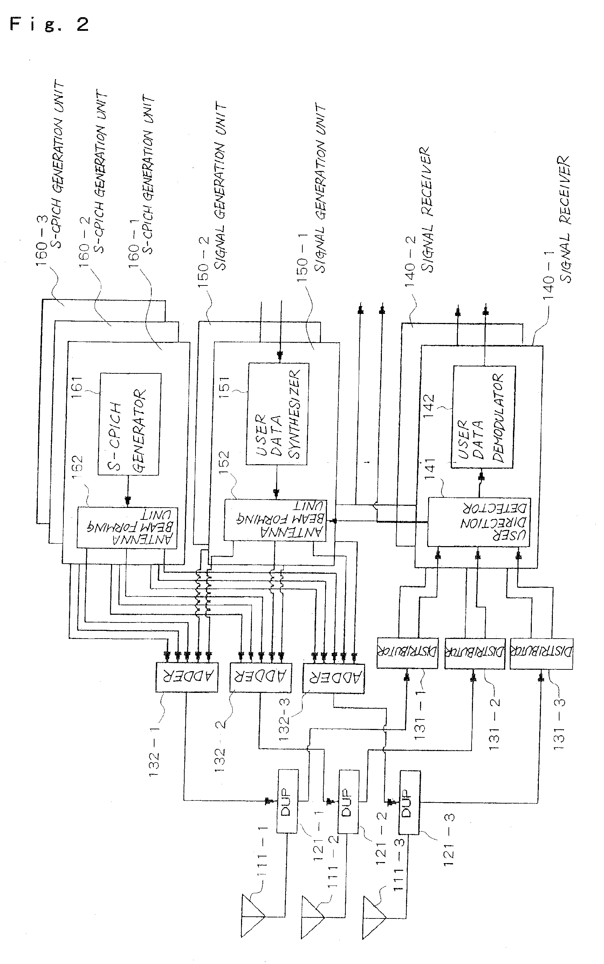

FIG. 2 shows the configuration in the first embodiment of base station 2 shown in FIG. 1. Although the numbers of antennas, users, and antenna beams are 3, 2, and 3, respectively, in the present embodiment, the present invention is not limited to these numbers.

As shown in FIG. 2, a plurality of antennas 111-1-111-3 and transmit/reception shared devices 121-1-121-3 are provided corresponding to each of antenna beams 5-1-5-3 in base station 2 of the present embodiment. Uplink signals and downlink signals are separated by means of these transmission/reception shared devices 121-1-121-3. Uplink signals received by way of antennas 111-1-113-3 are separated by transmission/reception shared devices 121-1-121-3 and applied as input to distributors 131-1-131-3 for each antenna, divided by a number equal to the number of users and applied as input to signal receivers 140-1 and 140-2 for each user. Signal receiver 140-1 is composed of user direction detector 141 and user data demodulator 142, and signal receiver 140-2 has an equivalent configuration. In addition, signal generation unit 150-1 is made up from user data synthesizer 151 and antenna beam forming unit 152, and signal generation unit 150-2 is of the same configuration. User direction detector 141 finds the received power of uplink signals in antennas 111-1-111-3, and detects the direction of mobile station 3 from the antenna beam that corresponds to the antennas 111-1-111-3 that obtains the greatest power. The direction of mobile station 3 that has been detected is sent to signal generation units 150-1 and 150-2 for each mobile station 3 and used when generating downlink signals. Upon detecting a change in the direction of mobile station 3 obtained by the above-described process, user direction detector 141 reports this change to radio network controller 1. On the other hand, data received by way of antennas 111-1-111-3 in which the greatest power is obtained are applied to user data demodulator 142 for demodulation and then sent to radio network controller 1.

User data that are sent in from radio network controller 1, on the other hand, are applied as input to signal generation units 150-1 and 150-2 for each user. User data that have been applied as input to signal generation units 150-1 and 150-2 are combined with control signals in user data synthesizer 151 and then supplied as output. Combined signals supplied from user data synthesizer 151 are converted to signals for each of antennas 111-1-111-3 in antenna beam forming unit 152 by multiplying the combined signals with weights of each of antennas 111-1-111-3 that accord with the direction of mobile station 3 that is reported from user direction detector 141.

In addition, S-CPICH that are used as the phase reference, which is the reference phase information, are transmitted with a one-to-one correspondence with antenna beams 5-1-5-3 by different antenna beams 5-1-5-3 by each of S-CPICH generation units 160-1-160-3 equal in number to the S-CPICH. S-CPICH generation unit 160-1 is composed of S-CPICH generator 161 and antenna beam forming unit 162, and S-CPICH generation units 160-2 and 160-3 are of equivalent configuration. S-CPICH that are generated by S-CPICH generator 161 are applied to antenna beam forming unit 162, where the S-CPICH generated in S-CPICH generator 161 is used to form antenna signals.

The antenna signals generated in each of signal generation units 150-1 and 150-2 and S-CPICH generation units 160-1-160-3 are added for each of antennas 111-1-111-3 by adders 132-1-132-3, respectively, and transmitted by way of transmission/reception shared devices 121-1-121-3 and antennas 111-1-111-3.

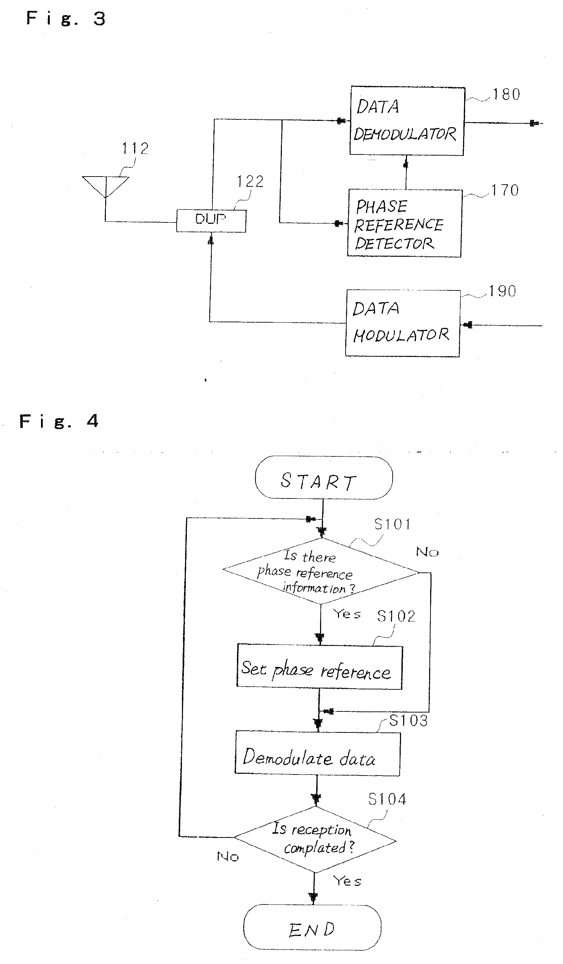

FIG. 3 shows the configuration in the first embodiment of mobile station 3 shown in FIG. 1.

As shown in FIG. 3, the present embodiment is made up from: antenna 112, transmission/reception shared device 122, data demodulator 180, phase reference detector 170, and data modulator 180. Transmission/reception shared device 122 separates the uplink signals and downlink signals. Downlink signals that are received by way of antenna 112 and separated in transmission/reception shared device 122 are applied as input to each of phase reference detector 170 and data demodulator 181. Phase reference detector 170 detects instructions from radio network controller 1 among the downlink signals that have been separated by transmission/reception shared device 122 and determines which physical channel should be applied for phase reference. Information regarding the phase reference that is thus determined is sent to data demodulator 190. Data demodulator 190 calculates the communication path fluctuation caused by fading according to the information sent from phase reference detector 170, and then demodulates the data of the uplink signals that have been received by way of antenna 112 and separated in transmission/reception shared device 122.

On the other hand, data that are transmitted from mobile station 3 to base station 2 are modulated in data modulator 190 and then transmitted from antenna 112 by way of transmission/reception shared device 122.

The following explanation relates to the operation in the mobile communication system of the above-described configuration.

Explanation first regards the operation of mobile station 3.

FIG. 4 is a flow chart for explaining the operation of mobile station 3 in the first embodiment of the mobile communication system shown in FIG. 1.

At the beginning of data communication, mobile station 3 first checks for instructions from radio network controller 1 relating to the phase reference (Step S101). When there are no instructions from radio network controller 1, mobile station 3 uses P-CPICH as the phase reference. When instructions have been received from radio network controller 1 indicating that S-CPICH is to be used as the phase reference, mobile station 3 sets the S-CPICH according to these instructions to the phase reference (Step S102) and uses the S-CPICH that has been set to demodulate data (Step S103).

Mobile station 3 then checks for instructions relating to the phase reference from radio network controller 1 until the completion of data reception (Step S104).

Explanation next relates to the operation of base station 2.

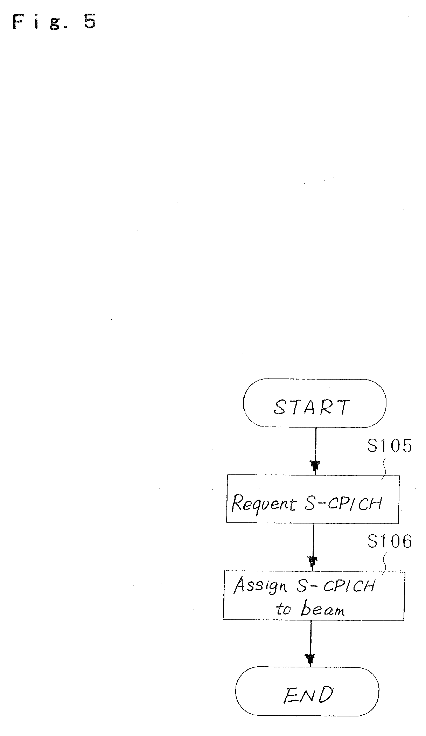

FIG. 5 is a flow chart for explaining the operation at the time of initial settings of base station 2 in the first embodiment of the mobile communication system shown in FIG. 1.

At the time of initial settings, base station 2 first reports the number of antenna beams that can be transmitted within the cell to radio network controller 1, and submits a request to radio network controller 1 for a number of S-CPICH equal to this reported number (Step S105).

Then, after the assigned S-CPICH in radio network controller 1 have been communicated, the communicated S-CPICH are assigned for each antenna beam to begin transmission on down links (Step S106).

After completion of the above-described initial settings, the process proceeds to the normal state.

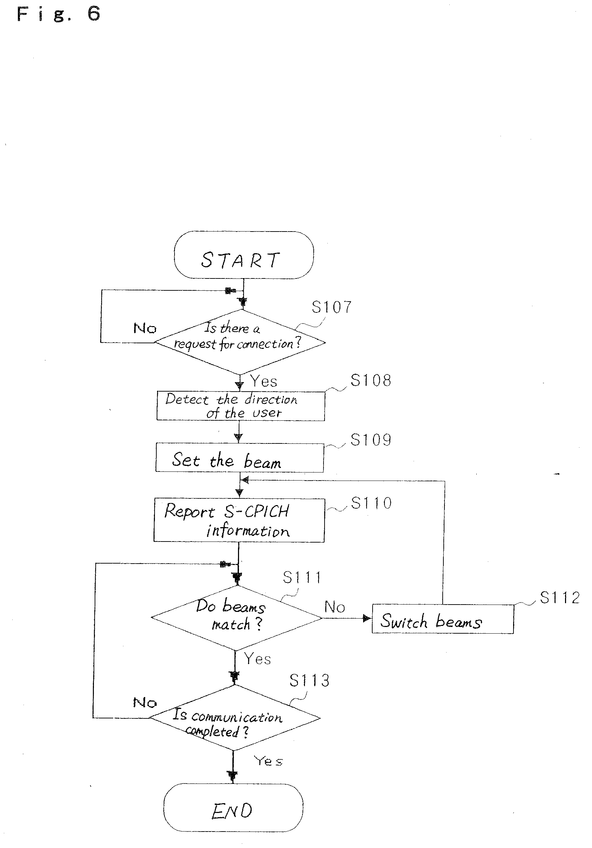

FIG. 6 is a flow chart for explaining the operation during the normal state of base station 2 in the first embodiment of the mobile communication system shown in FIG. 1.

In the normal state, base station 2 is in standby until there is a request for a line connection from mobile station 3 (Step S107).

When a line connection is requested from mobile station 3, base station 2 first detects the direction of mobile station 3 from the uplink line signal (Step S108), selects the S-CPICH that is transmitted on the antenna beam in which the antenna gain is greatest in the direction of mobile station 3, and further, sets this antenna beam as the antenna beam of the down link (Step S109).

The information of the S-CPICH that was set in Step S109 is reported to radio network controller 1 (Step S110).

Base station 2 subsequently uses the uplink signal to periodically detect the direction of mobile station 3 while transmitting data to and receiving data from mobile station 3 by means of the assigned antenna beam, checks whether the currently used antenna beam matches the antenna beam that is obtained by detection of the direction of mobile station 3 (Step S111), switches to the antenna beam obtained by detecting the direction of mobile station 3 when the two antenna beams do not match (Step S112), and returns to the process in Step S110 to report to radio network controller 1 information relating to the S-CPICH that is assigned to the switched antenna beam.

Base station 2 then monitors the results of detecting the direction of mobile station 3 until completion of communication (Step S113).

Explanation next regards the operation of radio network controller 1.

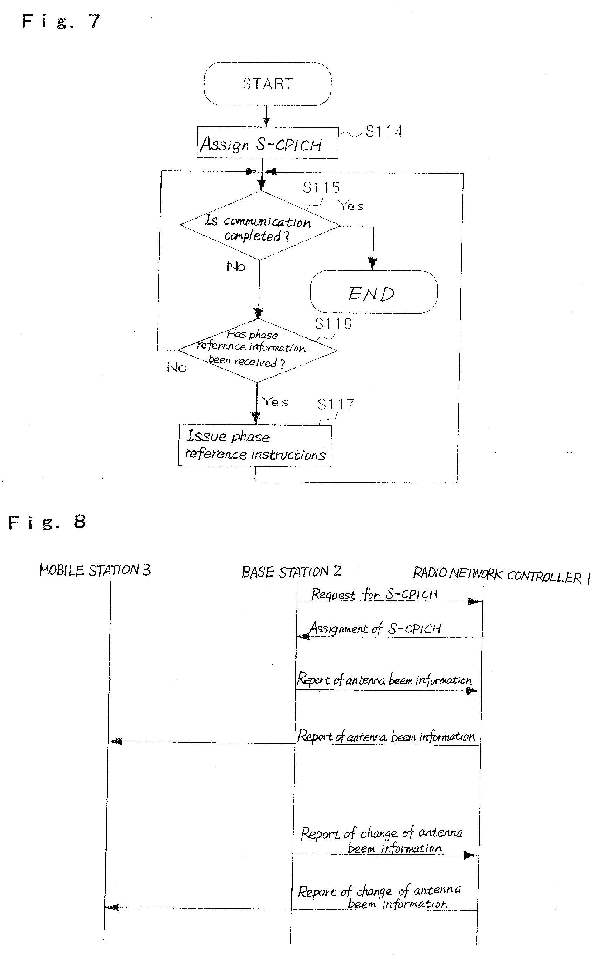

FIG. 7 is a flow chart for explaining the operation of radio network controller 1 in the first embodiment of the mobile communication system shown in FIG. 1.

As the initial operation, when-radio network controller 1 receives a request for assignment of S-CPICH from base station 2, radio network controller 1 assigns S-CPICH equal in number to the requested number (Step S114).

Until the completion of communication (Step S115), when radio network controller 1 subsequently receives from base station 2 information regarding S-CPICH that has been assigned in base station 2 to mobile station 3 (Step S116), radio network controller 1 transmits to mobile station 3 instructions to apply the S-CPICH received from base station 2 as the phase reference (Step S117). After having completed the initial settings and until the completion of communication, radio network controller 1 continues to wait for notification of the setting or the change of S-CPICH from base station 2.

Explanation next regards the flow of control signals in the above-described radio network controller 1, base station 2, and mobile station 3.

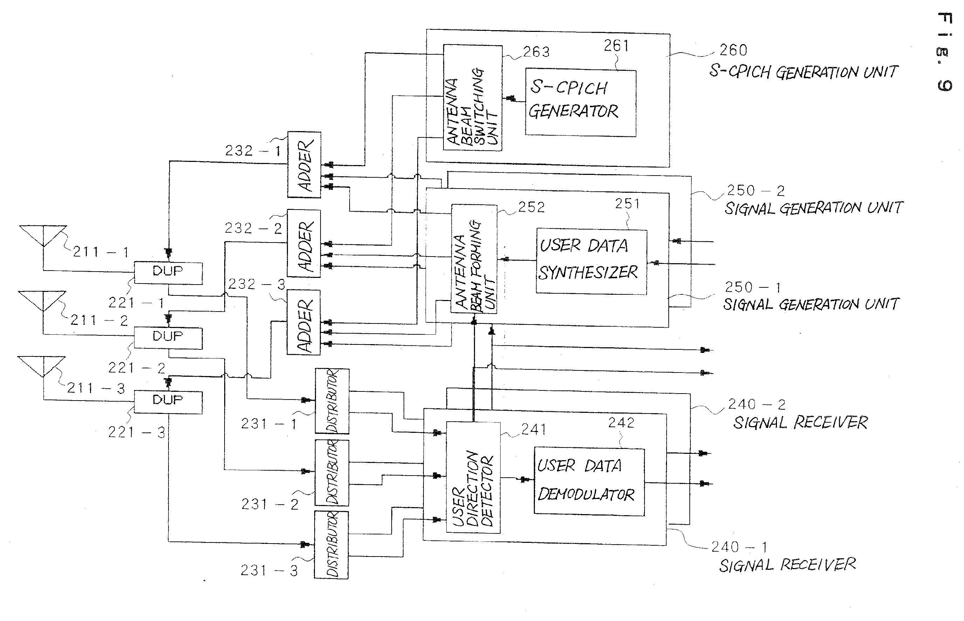

FIG. 8 is a sequence chart for explaining the flow of control signals in the first embodiment of the mobile communication system shown in FIG. 1.

Base station 2 first reports to radio network controller 1 the number of antenna beams that can be transmitted, and transmits a request for the assignment of an equal number of S-CPICH.

Radio network controller 1 thereupon assigns S-CPICH according to the request from base station 2 and reports the assigned S-CPICH to base station 2.

Base station 2 next sets the S-CPICH that mobile station 3 is to use as the phase reference in accordance with the direction of mobile station 3 for which there is a connection request, and reports the set S-CPICH to radio network controller 1.

Radio network controller 1 then transmits instructions to mobile station 3 to apply the S-CPICH that was set in base station 2 as the phase reference.

Mobile station 3 applies the S-CPICH that was set in base station 2 as the phase reference in accordance with the instructions from radio network controller 1 and demodulates data that have been transmitted in from base station 2.

Base station 2 subsequently periodically detects the antenna beam that is used in transmission to mobile station 3, and if the antenna beam changes, notifies radio network controller 1 that the antenna beam has changed.

Having received notification of the change of antenna beam from base station 2, radio network controller 1 supplies instructions to change the phase reference to mobile station 3.

When mobile station 3 has received instructions from radio network controller 1 to change the phase reference, mobile station 3 demodulates data using the S-CPICH received in the instructions as the phase reference.

In the embodiment according to the above-described embodiment, base station 2 assigns different S-CPICH for each antenna beam and further, both transmits data by the antenna beam that is closest to the direction of mobile station 3 and reports information relating to the S-CPICH to mobile station 3, whereby mobile station 3 is able to use, as the phase reference, S-CPICH that has undergone transmission path fluctuation identical to that of the data.

### Second Embodiment

As with the system shown in FIG. 1, the system configuration of this embodiment is composed of line controller 1, base station 2, and mobile station 3.

Base station 2 uses a nondirectional antenna pattern 4 to uniformly transmit a first downlink common pilot channel (P-CPICH) to mobile stations 3 within the same cell. In addition, base station 2 has a plurality of antenna beams 5-1-5-3 that divide the cell and switches the antenna beams in order at a fixed period to transmit second downlink common pilot channels (S-CPICH) that differ for each of these antenna beams 5-1-5-3. When base station 2 has received data from radio network controller 1, selects one antenna beam for mobile station 3 from among the plurality of antenna beams 5-1-5-3, and uses the selected antenna beam to transmit the received data and control signals to mobile station 3 by means of DL-DPDCH and DL-DPCCH.

FIG. 9 shows the configuration in the second embodiment of base station 2 shown in FIG. 1. Although the numbers of antennas, users, and antenna beams are 3, 2, and 3, respectively, in the present embodiment, the present invention is not limited to these numbers.

As shown in FIG. 9, base station 2 in the present embodiment differs from the base station shown in FIG. 2 only with regard to the configuration of S-CPICH generation unit 260.

S-CPICH generation unit 206 in the present embodiment is made up from: S-CPICH generator 261 for generating S-CPICH that has been instructed from radio network controller 1 and antenna beam switching unit 263 for switching antenna beams at fixed time intervals and converting antenna signals, and only one S-CPICH generation unit 206 is provided regardless of the number of antenna beams.

The configuration of mobile station 3 in the present embodiment is identical to mobile station 3 shown in FIG. 3.

Explanation next regards the operation in the mobile communication system of the configuration described above.

Explanation first regards the operation of mobile station 3.

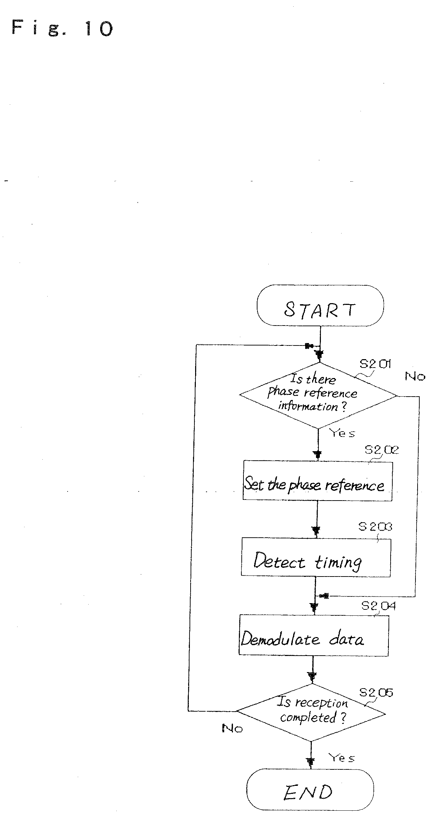

FIG. 10 is a flow chart for explaining the operation of mobile station 3 in the second embodiment of the mobile communication system shown in FIG. 1.

Upon starting data communication, mobile station 3 first checks for instructions from radio network controller 1 that relate to phase reference (Step S201). If there are no instructions from radio network controller 1, mobile station 3 uses P-CPICH as the phase reference. On the other hand, if instructions have been received from radio network controller 1 indicating that S-CPICH is to be used as the phase reference, mobile station 3 sets the S-CPICH according to the instructions as the phase reference (Step S202).

In addition, S-CPICH is transmitted from base station 2 at time divisions, and the reception timing must therefore be synchronized. Regarding the reception timing, slot numbers or frame numbers and periods are reported by means of control information that is transmitted in from radio network controller 1, and the reception timing of S-CPICH is detected based on this information (Step S203).

Mobile station 3 then finds the amount of correction of the phase due to fading with S-CPICH as the phase reference, and then demodulates the data that are transmitted in from the base station (Step S204).

Mobile station 3 subsequently checks for instructions relating to phase reference from radio network controller 1 until completion of data reception (Step S205).

Explanation next regards the operation of base station 2.

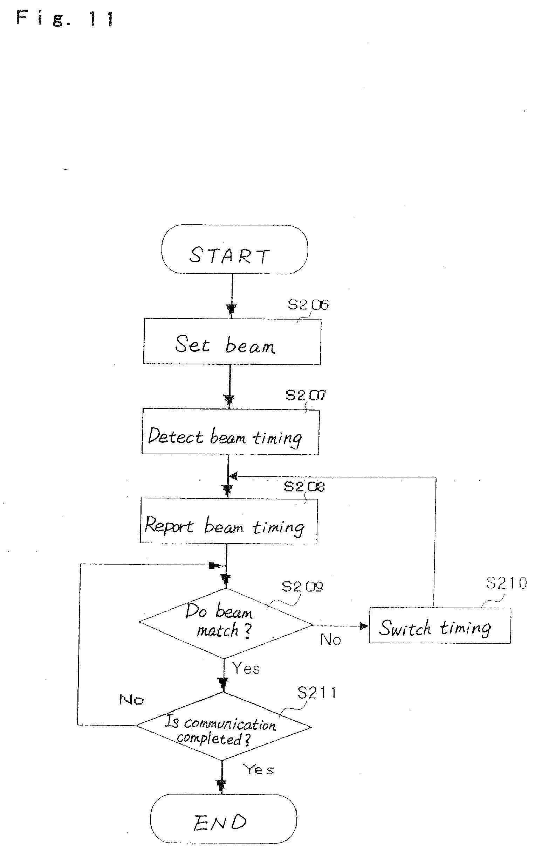

FIG. 11 is a flow chart for explaining the operation of base station 2 in the second embodiment of the mobile communication system shown in FIG. 1.

First, as initial operation, base station 2 requests one S-CPICH from radio network controller 1. Having been assigned a S-CPICH, base station 2 transmits S-CPICH while switching the antenna beam at fixed time intervals.

Base station 2 sets the antenna beam that is to be used in a down link based on the direction of reception of uplink line from a connecting mobile station 3 (Step S206).

When the antenna beam is set, base station 2 uses this antenna beam to check the slot number or frame number of the S-CPICH for which transmission has already started, and thus detects the reception timing of S-CPICH in mobile station 3 (Step S207). Base station 2 then reports to mobile station 3 information relating to the reception timing of S-CPICH (the slot number or frame number and period) by way of radio network controller 1 (Step S208).

Base station 2 subsequently uses the uplink signals to detect the direction of mobile station 3 while communicating by means of the antenna beam that has been set, and thus checks whether the currently used antenna beam matches with the antenna beam that is obtained by the detection of direction of mobile station 3 (Step S209). If the two antenna beams do not match, base station 2 switches to the antenna beam obtained by detection of the direction of mobile station 3 (Step S210), returns to the process in Step S208, and reports information relating to the reception-timing of S-CPICH (the slot number or the frame number and period) by means of the switched beam by way of radio network controller 1.

Base station 2 then monitors the results of detecting the direction of mobile station 3 until the completion of communication (Step S211), whereby base station 2 detects the reception timing of the optimum S-CPICH for mobile station 3.

Explanation next regards the operation of radio network controller 1.

FIG. 12 is a flow chart for explaining the operation of line controller 1 in the second embodiment of the mobile communication system shown in FIG. 1.

As the initial operation, when assignment of S-CPICH is requested from base station 2, radio network controller 1 assigns S-CPICH in accordance with the request (Step S212).

Subsequently, until the completion of communication (Step S213), radio network controller 1 both transmits to mobile station 3 instructions to apply S-CPICH as the phase reference and transmits information relating to the reception timing (Step S215) when information relating to reception timing of S-CPICH of mobile station 3 is reported from base station 2 (Step S214).

These operations are repeated until the completion of the communication of mobile station 3.

Explanation next regards the flow of control signals in above-described radio network controller 1, base station 2 and mobile station 3.

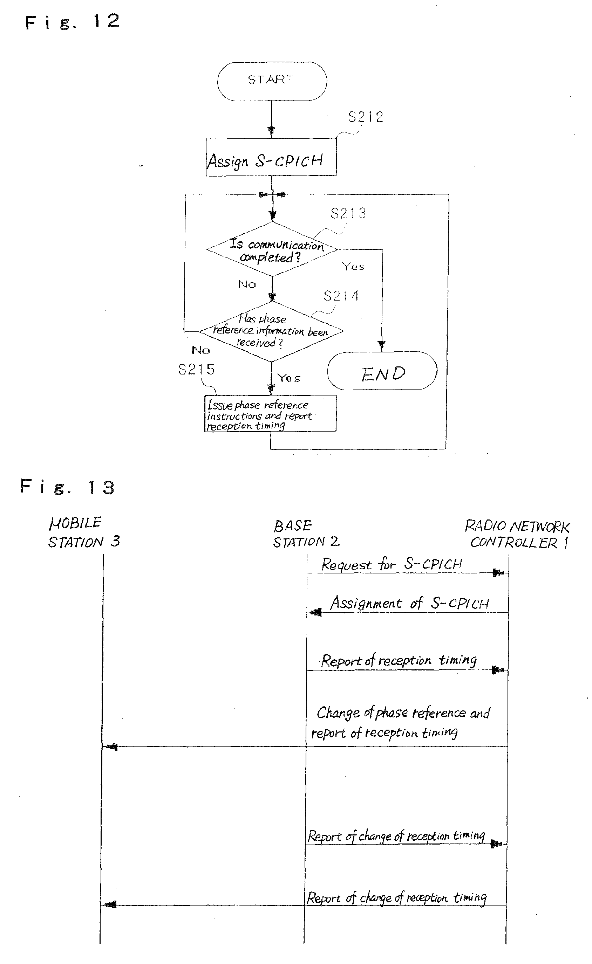

FIG. 13 is a sequence chart for explaining the flow of control signals in the second embodiment of the mobile communication system shown in FIG. 1.

Base station 2 first submits a request to radio network controller 1 for the assignment of one S-CPICH.

Upon receiving the request from base station 2, radio network controller 1 assigns S-CPICH to base station 2 and notifies base station 2.

Base station 2 further reports to radio network controller 1 the reception timing of the S-CPICH that mobile station 3, for which there is a connection request, is to receive as phase reference.

Upon receiving the reception timing of the S-CPICH of mobile station 3 from base station 2, radio network controller 1 transmits to mobile station 3 instructions to use S-CPICH as phase reference and the reception timing.

Upon receiving the instructions of the change of phase reference from radio network controller 1, mobile station 3 performs demodulation with the instructed S-CPICH as the phase reference at the designated reception timing.

Base station 2 then periodically checks the antenna beam used in transmission to mobile station 3, and in the event of a change of antenna beam, reports to radio network controller 1 the change of the antenna beam and the new reception timing.

Upon receiving notification of a change of antenna beam from base station 2, radio network controller 1 transmits instructions to mobile station 3 to change the reception timing of the phase reference.

In the present embodiment, base station 2 thus switches the antenna beam for transmitting S-CPICH at time intervals, transmits data by the antenna beam that is closest to the direction of mobile station 3, and reports to mobile station 3 the timing of the transmission of S-CPICH at the same time as the antenna beam that is transmitting data, whereby mobile station 3 is able to use, as phase reference, S-CPICH that has undergone the same communication path fluctuation as the data.

### Third Embodiment

As with the system shown in FIG. 1, the system configuration in the present embodiment is made up from radio network controller 1, base station 2, and mobile station 3.

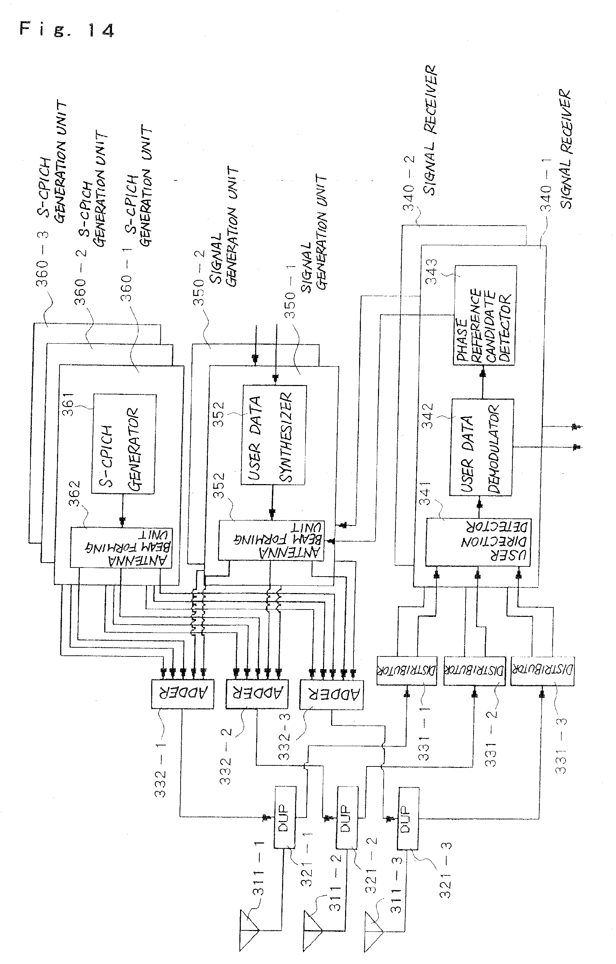

FIG. 14 shows the configuration in the third embodiment of base station 2 shown in FIG. 1.

As shown in FIG. 14, base station 2 in the present embodiment is of a configuration in which signal receivers 340-1 and 340-2 are different from the configuration shown in FIG. 2. In the configuration shown in FIG. 2, the direction of mobile station 3 is reported to signal generation units 150-1 and 150-2 by means of user direction detector 141, but in the present embodiment, this report is not performed. Instead, phase reference candidate detectors 343 are added to signal receivers 340-1 and 340-2, and based on dedicated control information supplied from user data demodulator 342, these phase reference candidate detectors 343 detect the S-CPICH that maximizes the reception power reported by mobile station 3. Phase reference candidate detectors 343 report the direction in which the S-CPICH reported from mobile station 3 were transmitted to antenna beam forming unit 352 in signal generation units 350-1 and 350-2. Based on the output of phase reference candidate detectors 343, signal generation units 350-1 and 350-2 form antenna beams and convert the user data to antenna signals.

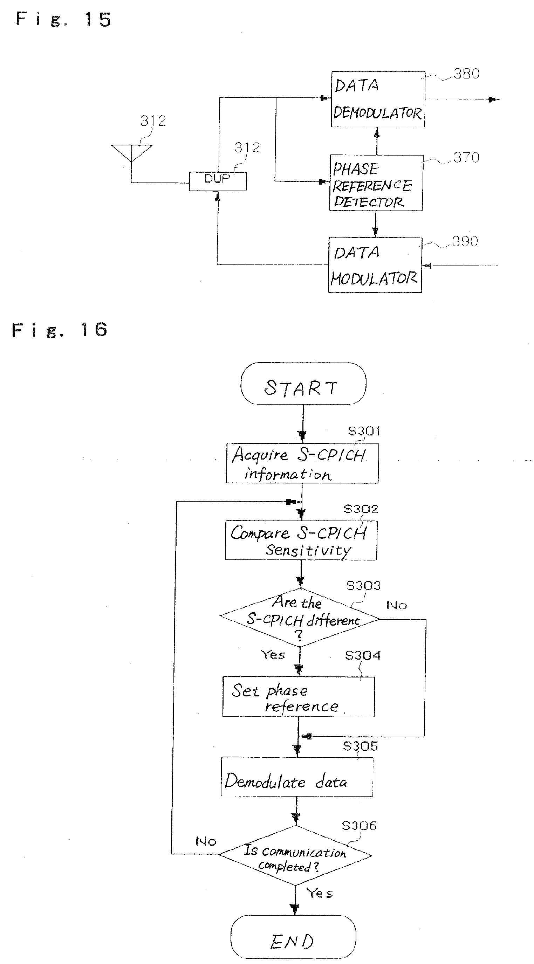

FIG. 15 shows the configuration in the third embodiment of mobile station 3 shown in FIG. 1.

As shown in FIG. 15, mobile station 3 in the present embodiment differs from the configuration shown in FIG. 3 only in that: phase reference detector 370 measures the reception power of all S-CPICH that have been reported from radio network controller 1 and applies as input to data modulator 390 the information of the S-CPICH for which the power is maximized; and data modulator 390 reports to base station 2 the S-CPICH that maximizes reception power by transmitting together with data the information of S-CPICH obtained from phase reference detector 370 as dedicated control data.

Explanation next regards the operation in the mobile communication system that is of the above-described configuration.

Explanation first regards the operation of mobile station 3.

FIG. 16 is a flow chart for explaining the operation of mobile station 3 in the third embodiment of the mobile communication system shown in FIG. 1.

When mobile station 3 is notified from radio network controller 1 that base station 2 is carrying out beam forming and acquires, at a fixed period, information of the S-CPICH that is transmitted by an antenna beam (Step S301), mobile station 3 compares the reception sensitivity (reception power) of each acquired S-CPICH to find the S-CPICH that is received at the highest power (Step S302), and thus selects the S-CPICH having the best reception quality.

If the S-CPICH that was highest up until the measurement differs from the S-CPICH obtained by measurement (Step S303), mobile station 3 both reports this finding to base station 2 by way of a dedicated data line and sets as the phase reference the S-CPICH after comparison (Step S304).

Mobile station 3 then uses the S-CPICH that has been set to demodulate data that have been transmitted in from base station 2 (Step S305). Subsequently and up to the completion of communication, mobile station 3 periodically compares the sensitivities of S-CPICH while continuing to demodulate data (Step S306).

Explanation next regards the operation of base station 2.

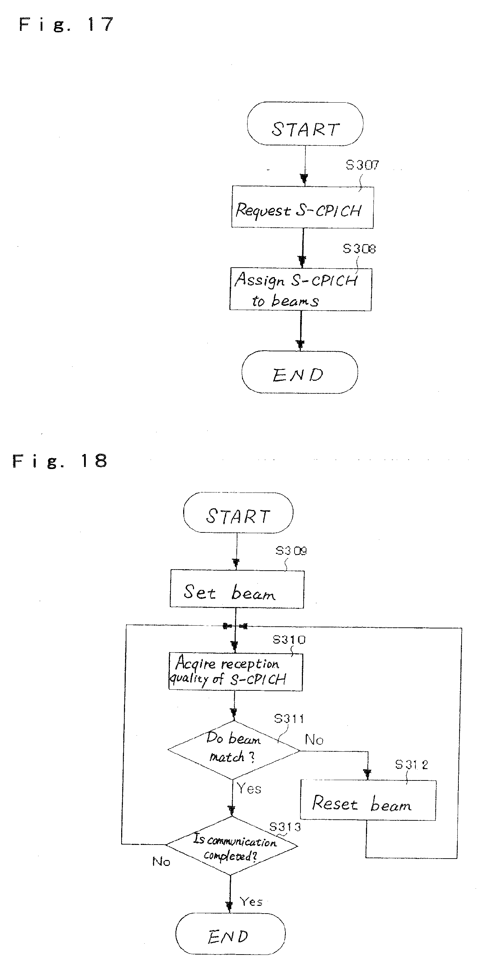

FIG. 17 is a flow chart for explaining the operation during initial setting of base station 2 in the third embodiment of the mobile communication system shown in FIG. 1.

During initial settings, base station 2 first reports to radio network controller 1 that beam forming is being carried out, and further, reports to radio network controller 1 the number of antenna beams and requests the assignment of a number of S-CPICH equal to the number of antenna beams for use as phase reference (Step S307).

After receiving notification of the S-CPICH that have been assigned in radio network controller 1, base station 2 assigns S-CPICH and begins transmission on a down link (Step S308).

Upon completion of the above-described initial settings, the process shifts to the normal state.

FIG. 18 is a flow chart for explaining operations during the normal state of base station 2 in the third embodiment of the mobile communication system shown in FIG. 1.

Base station 2 first detects the direction of mobile station 3 from the uplink line of mobile station 3, sets the antenna beam having the antenna pattern for transmitting in the direction of mobile station 3, and uses this antenna pattern to transmit data to mobile station 3 (Step S309).

After acquiring information of the S-CPICH for which the reception power reported from mobile station 3 is a maximum (Step S310), base station 2 compares the antenna beam that transmits the reported S-CPICH with antenna beam that is currently transmitting data (Step S311), and continues communication without switching beams when the two coincide. However, if the two beams do not match, base station 2 switches the beam that is transmitting data to the beam that is reported from mobile station 3 and performs communication (Step S312).

Subsequently and until the completion of communication, base station 2 continues to determine switching of beams using the information of S-CPICH that is periodically reported from mobile station 3 (Step S313).

Explanation next regards the operation of radio network controller 1.

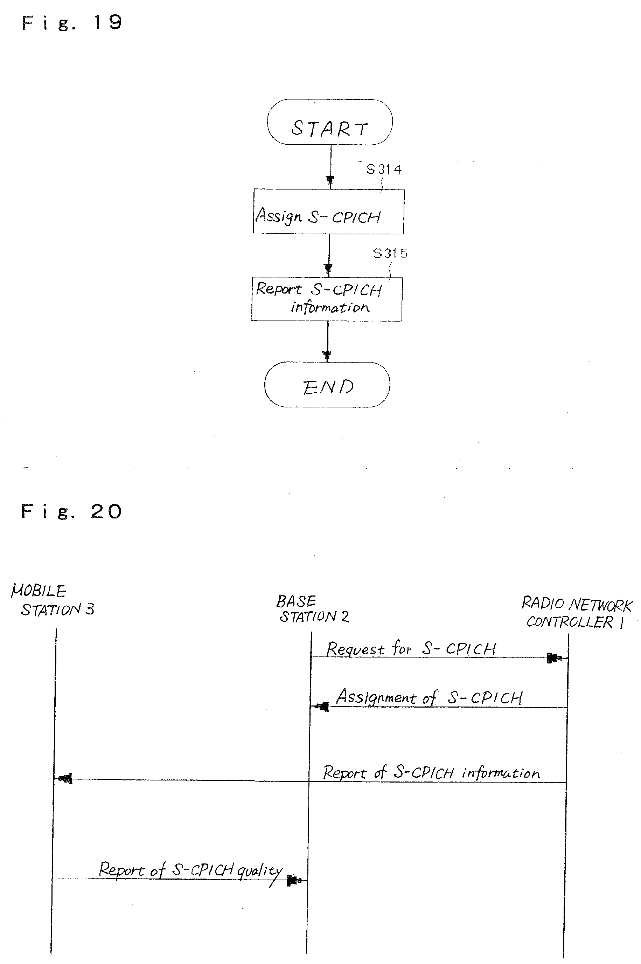

FIG. 19 is a flow chart for explaining the operation of radio network controller 1 in the third embodiment of the mobile communication system shown in FIC. 1.

Radio network controller 1 assigns S-CPICH in accordance with a request from base station 2 (Step S314) and reports the assigned S-CPICH to base station 2.

Radio network controller 1 then reports to mobile station 3 all S-CPICH that radio network controller 1 has assigned to base station 2 and instructs mobile station 3 to apply the S-CPICH as phase reference (Step S315).

Explanation next regards the flow of control signals in the above-described radio network controller 1, base station 2, and mobile station 3.

FIG. 20 is a flow chart for explaining the flow of control signals in the third embodiment of the mobile communication system shown in FIG. 1.

Base station 2 first submits a request to radio network controller 1 for S-CPICH.

Radio network controller 1 assigns the S-CPICH and then both reports the assigned S-CPICH to base station 2 and reports to mobile station 3 information of the S-CPICH that have been assigned to base station 2.

Mobile station 3 measures the quality (reception power) for the S-CPICH that have been reported from radio network controller 1 and reports the results of measurement to base station 2. The reporting of measurement results is carried out at a fixed period during communication.

Thus, in the present embodiment, base station 2 assigns different S-CPICH for each antenna beam and, using reports relating to the reception quality of the S-CPICH from mobile station 3, transmits data and S-CPICH by the same antenna beam, whereby mobile station 3 is able to use, as phase reference, S-CPICH that has undergone the same communication path fluctuation as the data.

In addition, in the present embodiment, when changing the antenna beam, base station 2 implements changes based on information reported from mobile station 3 without going by way of radio network controller 1, whereby the switching time can be made shorter than a case in which the antenna beam is changed by way of radio network controller 1. In addition, because information is not reported to radio network controller 1, the load on radio network controller 1 can be reduced.

### Fourth Embodiment

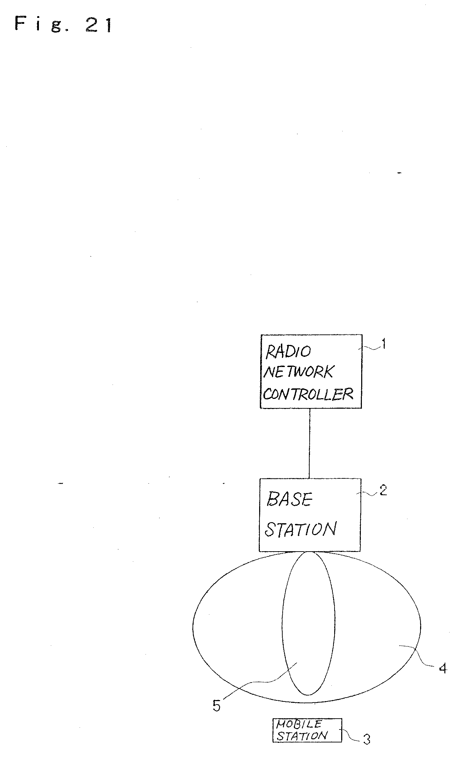

FIG. 21 shows the configuration of another embodiment of the mobile communication system of the present invention.

As shown in FIG. 21, this embodiment is identical to the system shown in FIG. 1 in that it is made up from radio network controller 1, base station 2, and mobile station 3, but base station 2 transmits the common pilot channel by a different transmission method. In the present embodiment, base station 2 forms antenna beams 5 that differ for each mobile station 3 and transmits S-CPICH by these antenna beams 5. Accordingly, the number of antenna beam 5 for transmitting S-CPICH must be equal to the number of mobile stations 3.

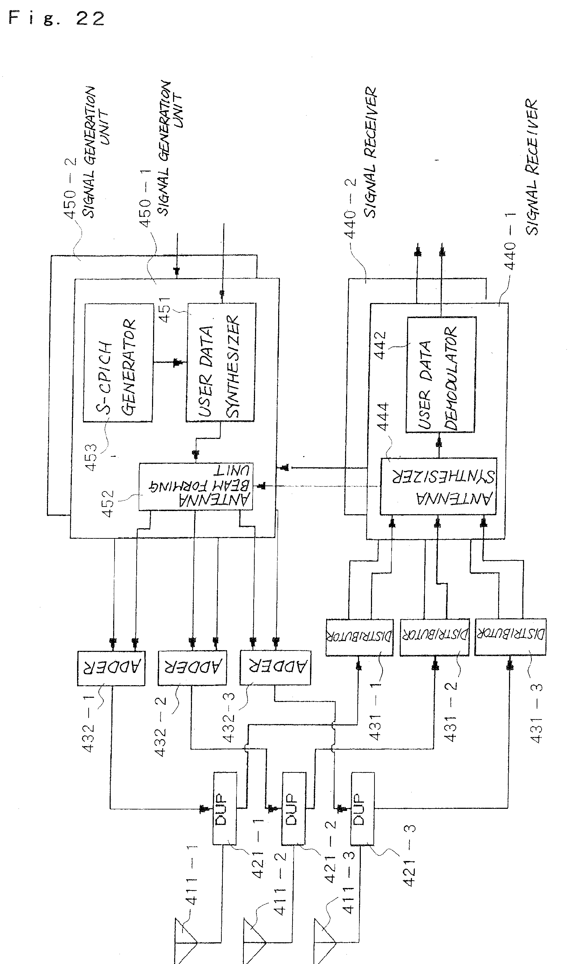

FIG. 22 shows the configuration in the fourth embodiment of base station 2 shown in FIG. 21.

As shown in FIG. 22, , base station 2 in the present embodiment differs from base station 2 shown in FIG. 2 only in that S-CPICH generation units 160-1-160-3 are eliminated and S-CPICH generators 453 are provided in signal generation units 450-1 and 450-2, and in that antenna synthesizer 444 is provided in place of user direction detector 141.

In signal generation units 450-1 and 450-2, S-CPICH that are generated in S-CPICH generator 453 are applied as input to user data synthesizer 451. In user data synthesizer 451, data and control information sent in from radio network controller 1 are combined and S-CPICH are multiplexed. The multiplexed signal is applied as input to antenna beam forming unit 452 and converted to antenna signals.

Antenna signals in which S-CPICH have been multiplexed for each user are then combined by adders 432-1-432-3 and then transmitted by way of transmission/reception shared devices 421-1-421-3 and antennas 411-1-411-3.

In addition, base station 2 holds an antenna beam for each mobile station 3 and adaptively updates the antenna beam. The antenna beams used in antenna synthesizer 444 are sent to signal generation units 450-1 and 450-2, converted from antenna beams used in uplink lines to antenna beams used in down links for use in antenna beam forming unit 452.

The configuration of mobile station 3 in the present embodiment is identical to that of mobile station 3 shown in FIG. 3.

Explanation next regards the operation in the mobile communication system of the above-described configuration.

Explanation first regards the operation of mobile station 3.

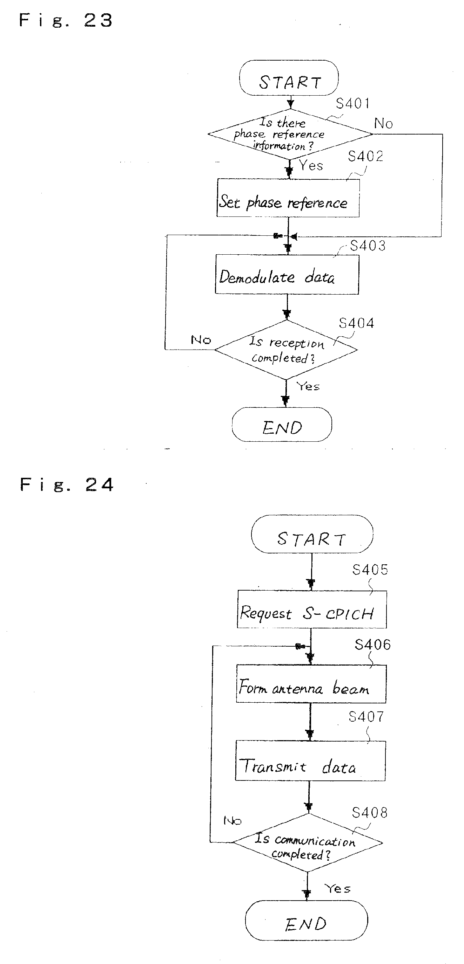

FIG. 23 is a flow chart for explaining the operation of mobile station 3 in the fourth embodiment of the mobile communication system shown in FIG. 21.

Upon the start of data communication, mobile station 3 first checks for instructions relating to phase reference from radio network controller 1 (Step S401). If there are no instructions from radio network controller 1, mobile station 3 uses P-CPICH as the phase reference. On the other hand, if instructions to use S-CPICH as the phase reference have been received from radio network controller 1, mobile station 3 sets the S-CPICH according to the instructions as the phase reference (Step S402) and uses the set S-CPICH to demodulate data that are transmitted in from base station 2 (Step S403).

Mobile station 3 subsequently demodulates data until the completion of data reception (Step S404).

Explanation next regards the operation of base station 2.

FIG. 24 is a flow chart for explaining the operation of base station 2 in the fourth embodiment of the mobile communication system shown in FIG. 21.

Base station 2 first submits a request to radio network controller 1 for S-CPICH for each connecting mobile station 3 (Step S405).

Base station 2 further converts antenna beams from antenna beam obtained for uplink line use to down link use and forms an antenna beam for each mobile station 3 (Step S406).

When S-CPICH have been assigned by radio network controller 1, base station 2 multiplexes and transmits these S-CPICH and user data signals (Step S407).

Base station 2 subsequently continues the above-described processes in Steps S406 and S407 until the completion of communication (Step S408).

Explanation next regards the operation of radio network controller 1.

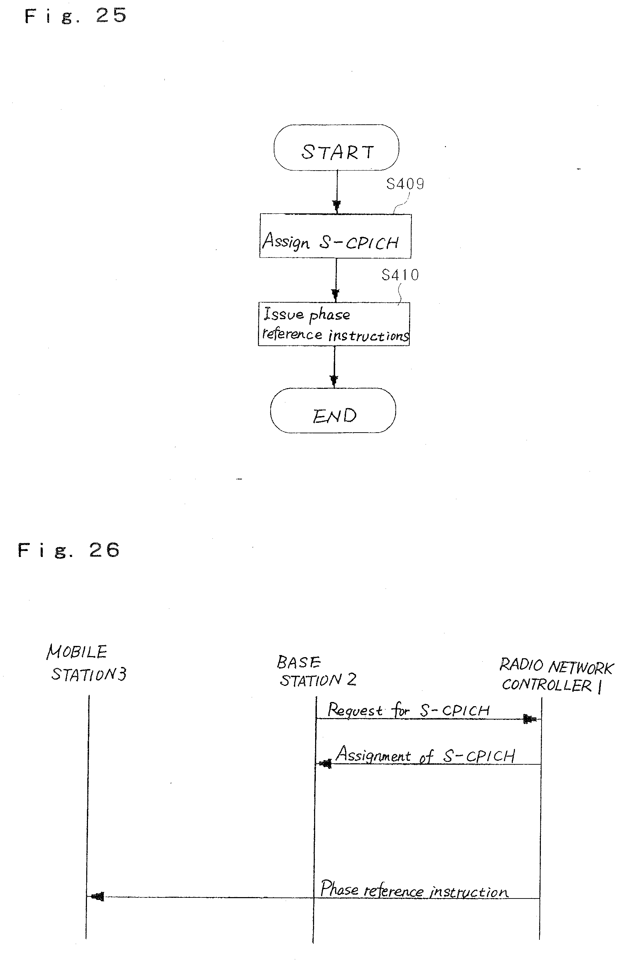

FIG. 25 is a flow chart for explaining the operation of radio network controller 1 in the fourth embodiment of the mobile communication system shown in FIG. 21.

Radio network controller 1 assigns different S-CPICH for each mobile station 3 in accordance with a request from base station 2 (Step S409).

When radio network controller 1 has assigned S-CPICH for each mobile station 3, radio network controller 1 reports the information of the assigned S-CPICH to base station 2 and mobile station 3 and gives instructions to apply the reported S-CPICH as phase reference (Step S410).

Explanation next regards the flow of control signals in the above-described radio network controller 1, base station 2, and mobile station 3.

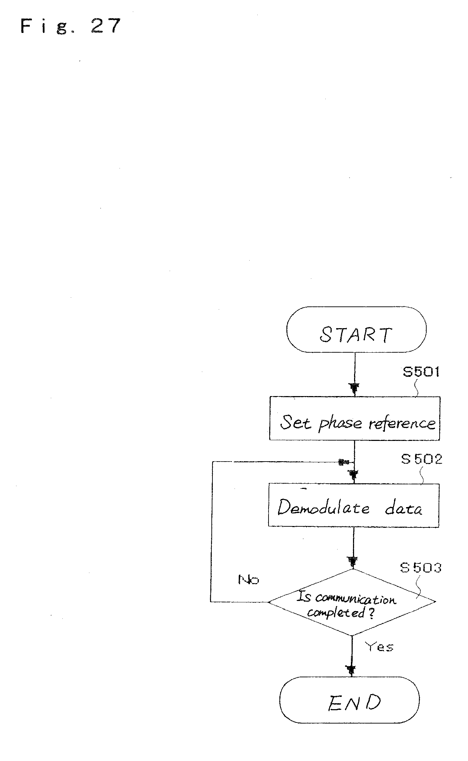

FIG. 26 is a sequence chart for explaining the flow of control signals in the fourth embodiment of the mobile communication system shown in FIG. 21.

When base station 2 transmits a request to radio network controller 1 for assignment of S-CPICH, radio network controller 1 assigns S-CPICH for each mobile station 3 and then both reports information of the assigned S-CPICH to base station 2 and instructs mobile stations 3 to apply the assigned S-CPICH as the phase reference.

Thus, in the present embodiment, base station 2 forms antenna beams in accordance with the directions of mobile stations 3 and transmits data and S-CPICH by the antenna beams that have been formed, whereby mobile stations 3 are able to use, as phase reference, S-CPICH that have received the same communication path fluctuation

### Fifth Embodiment

In the mobile communication system shown in FIG. 1, a configuration can be considered in which S-CPICH generation units 160-1-160-3 are eliminated from the configuration of base station 2 shown in FIG. 2 and base station 2 does not transmit S-CPICH.

The following explanation regards the operation in a mobile communication system of the above-described configuration.

Explanation first regards the operation of mobile station 3.

FIG. 27 is a flow chart for explaining the operation of mobile station 3 when a configuration is adopted in which S-CPICH generation units 160-1-160-3 are eliminated from the configuration of base station 2 shown in FIG. 2 and base station 2 does not transmit S-CPICH in the mobile communication system shown in FIG. 1.

When mobile station 3 has received notification from radio network controller 1 that base station 2 is applying beam forming and instructions to set a dedicated pilot channel as the phase reference, mobile station 3 sets the dedicated pilot channel as the phase reference (Step S501).

Mobile station 3 then estimates fluctuation in the communication path based on the dedicated pilot channel, demodulates data that have been transmitted in from base station 2 (Step S502), and repeats these processes until the completion of communication (Step S503).

Explanation next regards the operation of base station 2.

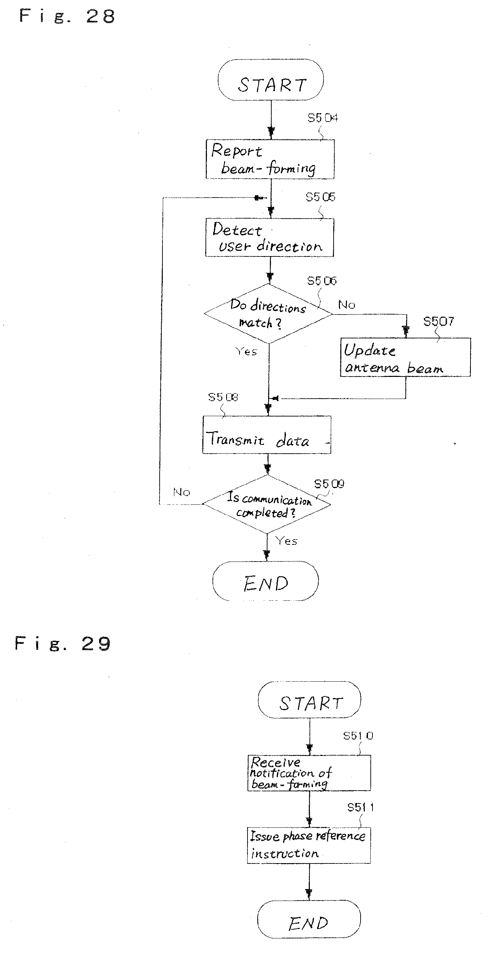

FIG. 28 is a flow chart for explaining the operation of base station 2 when a configuration is adopted in which S-CPICH generation units 160-1-160-3 are eliminated from the configuration of base station 2 shown in FIG. 2 and base station 2 does not transmit S-CPICH in the mobile communication system shown in FIG. 1.

Base station 2 reports to radio network controller 1 that it is applying beam forming (Step S504).

Base station 2 further detects at a fixed period the direction of mobile station 3 from the uplink line of mobile station 3 (Step S505), compares the results of detection with the direction obtained from the antenna beam that is currently transmitting (Step S506), and updates the antenna beam when the two beams do not match (Step S507).

When the detection results and the direction of the antenna beam that is currently transmitting match, or after the antenna beam has been updated in Step S507, base station 2 transmits data to mobile station 3 by that antenna beam (Step S508) and continues communication while detecting the direction of mobile station 3 until there are no more data (Step S509).

Explanation next regards the operation of radio network controller 1.

FIG. 29 is a flow chart for explaining the operation of radio network controller 1 when a configuration has been adopted in which S-CPICH generation units 160-1-160-3 are eliminated from the configuration of base station 2 shown in FIG. 2 and base station 2 does not transmit S-CPICH in the mobile communication system shown in FIG. 1.

Radio network controller 1, upon being notified from base station 2 that base station 2 is applying beam forming (Step S510), notifies mobile station 3 that base station 2 is applying beam forming and instructs mobile station 3 to set a dedicated pilot channel as the phase reference (Step S511).

Explanation next regards the flow of control signals in the present embodiment.

When base station 2 notifies radio network controller 1 that base station 2 is applying beam forming, radio network controller 1 notifies mobile station 3 that base station 2 is applying beam forming.

Thus, in the present embodiment, radio network controller 1 supplies instructions to mobile station 3 to apply a dedicated pilot as the phase reference, whereby mobile station 3 is able to obtain a phase reference that has received the same communication path fluctuation as the data.

### Sixth Embodiment

A configuration can also be considered in which S-CPICH generator 453 is eliminated from the configuration of base station 2 shown in FIG. 22 and base station 2 does not transmit S-CPICH in the mobile communication system shown in FIG. 21.

The operations of mobile station 3 and radio network controller 1 in this embodiment are the same as shown in the fifth embodiment.

In addition, the operation of base station 2 in this embodiment differ in that S-CPICH are not multiplexed with data in Step S407 shown in the fourth embodiment and S-CPICH are not transmitted from base station 2, but the operation is otherwise the same.

Further, the flow of control signals is the same as shown in the fifth embodiment.

In the present embodiment, radio network controller 1 supplies instructions to mobile station 3 to apply a dedicated pilot channel as the phase reference, whereby mobile station 3 is able to obtain a phase reference that has received the same communication path fluctuation as the data.

As explained in the six embodiments described above, in the present invention, base station 2 is able to transmit to mobile station 3 a phase reference using the same antenna beam as the data transmission, and as a result, when connected to base station 2 that has applied an adaptive antenna, mobile station 3 is able to select the optimum phase reference that represents communication path fluctuation.

Further, in the present invention, in addition to realizing the processing in radio network controller 1 and base station 2 by means of the above-described dedicated hardware, a program for realizing these functions may be recorded on a recording medium that can be read by radio network controller 1 and base station 2, and the program recorded on this recording medium may be read and executed by radio network controller 1 and base station 2. The recording medium that can be read by radio network controller 1 and base station 2 may be a relocateable recording medium such as a floppy disk, a magneto-optical disk, a DVD, or a CD, or may be an HDD that is incorporated in radio network controller 1 and base station 2. The program that is recorded on this recording medium may, for example, be read to a control block, whereby processing as described above is carried out under the control of the control block.

## Claims

1. A communication control method in a mobile communication system composed of a base station that transmits and receives data by means of an adaptive antenna having a plurality of antenna beams, a mobile station that transmits data to and receives data from said base station, and a radio network controller for controlling radio links of said mobile station; said communication control method comprising steps of:
submitting a request from said base station to said radio network controller for a common pilot channel that is transmitted on each of said plurality of antenna beams for use as reference phase information;
setting said common pilot channels in said radio network controller in accordance with the request from said base station and reporting the common pilot channels to said base station and said mobile station; and
using common pilot channels that have been reported from said radio network controller as said reference phase information to demodulate data that have been transmitted in from said base station in said mobile station.

2. A communication control method according to claim 1, comprising steps of:
reporting the number of said plurality of antenna beams from said base station to said radio network controller;
in said radio network controller, assigning a number of said common pilot channels equal to the number of said antenna beams that is reported from said base station and reporting the common pilot channels from said radio network controller to said base station;
selecting from among the plurality of common pilot channels that were reported from said radio network controller the optimum common pilot channel for a mobile station that transmits and receives data, and both transmitting data to said mobile station by the same antenna beam as the antenna beam that transmits the common pilot channel and reporting the common pilot channel from said base station to said mobile station by way of said radio network controller; and
using the common pilot channel that has been reported from said base station by way of said radio network controller as said reference phase information to demodulate data in said mobile station that have been transmitted in from said base station.

3. A communication control method according to the claim 1, comprising steps of:
in said base station, detecting the reception timing of the optimum said common pilot channel for said mobile station based on the position of said mobile station, and both transmitting data to said mobile station by the same antenna beam as the antenna beam that is transmitted at that reception timing and reporting the reception timing from said base station by way of said radio network controller to said mobile station; and
using the common pilot channel that is based on the reception timing reported from said base station by way of said radio network controller as said reference phase information to demodulate, in said mobile station, data that have been transmitted in from said base station.

4. A communication control method according to claim 1, comprising steps of:
reporting the number of said plurality of antenna beams from said base station to said radio network controller;
in said radio network controller, assigning a number of said common pilot channels equal to the number of said antenna beams that is reported from said base station and reporting these common pilot channels from said radio network controller to said base station;
transmitting data from said base station to said mobile station by the same antenna beam as the antenna beam that is transmitting the plurality of common pilot channels reported from said radio network controller;
in said mobile station, selecting from among said plurality of common pilot channels transmitted from said base station the common pilot channel having the best reception quality and both reporting this common pilot channel to said base station and setting this common pilot channel as said reference phase information; and
using the antenna beam that is transmitting the common pilot channel that is reported from said mobile station to transmit data from said base station to said mobile station.

5. A communication control method in a mobile communication system composed of a base station that transmits data to and receives data from mobile stations by means of an adaptive antenna having an antenna beam for each of said mobile stations and a radio network controller for controlling radio links of said mobile stations, said communication control method including steps of:
submitting a request from said base station to said radio network controller for common pilot channels that are transmitted on each of said antenna beams for use as reference phase information;
in said radio network controller, setting said common pilot channels on each of said mobile stations according to the request from said base station and reporting theses common pilot channels to said base station and said mobile stations; and
in said mobile stations, using the common pilot channels that have been reported from said radio network controller as said reference phase information to demodulate data that have been transmitted in from said base station.

6. A communication control method in a mobile communication system composed of a base station that transmits and receives data by means of an adaptive antenna having a plurality of antenna beams, mobile stations that transmit data to and receive data from said base station, and a radio network controller for controlling radio links of said mobile stations, the communication control method including steps of:
reporting to said radio network controller that an adaptive antenna is being applied in said base station;
instructing from said radio network controller to said mobile stations that a dedicated pilot channel is to be set as reference phase information; and
in said mobile stations, setting the dedicated pilot channel as the reference phase information in accordance with the instructions from said radio network controller and using said dedicated pilot channel as said reference phase information to demodulate data that have been transmitted in from said base station.

7. A communication control method in a mobile communication system composed of a base station that transmits data to and receives data from mobile stations by means of an adaptive antenna having antenna beams for each of said mobile stations, and a radio network controller for controlling radio links of said mobile stations, said communication control method including steps of:
reporting to said radio network controller that an adaptive antenna is being applied in said base station;
instructing said mobile stations from said radio network controller that a dedicated pilot channel is to be set as the reference phase information; and
in said mobile stations, setting the dedicated pilot channel as said reference phase information in accordance with the instructions from said radio network controller and using said dedicated pilot channel as said reference phase information to demodulate data that have been transmitted in from said base station.

8. A mobile communication system comprising:
a base station that transmits and receives data by means of an adaptive antenna having a plurality of antenna beams;
mobile stations that transmit data to and receive data from said base station; and
a radio network controller for controlling radio links of said mobile stations;
wherein:
said base station submits a request to said radio network controller for common pilot channels that are transmitted on each of said plurality of antenna beams for use as reference phase information;
said radio network controller sets said common pilot channels in accordance with the request from said base station and reports these common pilot channels to said base station and said mobile stations; and
said mobile stations use the common pilot channels that have been reported from said radio network controller as said reference phase information to demodulate data that have been transmitted in from said base station.

9. A mobile communication system according to claim 8, wherein:
said radio network controller assigns a number of said common pilot channels equal to the number of said antenna beams reported from said base station and reports these common pilot channels to said base station;
said base station selects from among the plurality of common pilot channels that have been reported from said radio network controller the optimum common pilot channel with a mobile station that transmits and receives data, and both transmits data to said mobile station by the same antenna beam as the antenna beam that is transmitting this common pilot channel and reports this common pilot channel to said mobile station by way of said radio network controller; and
said mobile station uses the common pilot channel that is reported from said base station by way of said radio network controller as said reference phase information to demodulate data that have been transmitted in from said base station.

10. A mobile communication system according to claim 8, wherein:
said base station detects the reception timing of the optimum said common pilot channel for said mobile station based on the position of that mobile station, and both transmits data to said mobile station by the same antenna beam as the antenna beam that is transmitting at that reception timing and reports that reception timing to said mobile station by way of said radio network controller; and
said mobile station uses the common pilot channel that is based on the reception timing reported from said base station by way of said radio network controller as said reference phase information to demodulate the data that have been transmitted in from said base station.

11. A mobile communication system according to claim 8, wherein:
said radio network controller assigns a number of said common pilot channels equal to the number of said antenna beams reported from said base station and reports these common pilot channels to said base station;
said base station transmits data to said mobile station by the same antenna beam as the antenna beam that is transmitting the plurality of common pilot channels reported from said radio network controller;
said mobile station selects from among said plurality of common pilot channels transmitted from said base station the common pilot channel having the best reception quality and both reports this common pilot channel to said base station and sets this common pilot channel as said reference phase information; and
said base station uses the antenna beam that is transmitting the common pilot channel reported from said mobile station to transmit data to said mobile station.

12. A mobile communication system comprising:
mobile stations;
a base station that transmits data to and receives data from said mobile stations by means of adaptive antennas having an antenna beam for each of the mobile stations; and
a radio network controller for controlling radio links of said mobile stations;
wherein:
said base station submits a request to said radio network controller for common pilot channels that are transmitted on each of said antenna beams for use as reference phase information;
said radio network controller sets said common pilot channels for each of said mobile stations in accordance with the request from said base station and reports these common pilot channels to said base station and said mobile stations; and
said mobile stations use the common pilot channels reported from said radio network controller as said reference phase information to demodulate data that are transmitted in from said base station.

13. A mobile communication system comprising:
a base station that transmits and receives data by means of an adaptive antenna having a plurality of antenna beams;
mobile stations that transmit data to and receive data from said base station; and
a radio network controller for controlling radio links of said mobile stations;
wherein:
said base station reports to said radio network controller that said base station is applying an adaptive antenna;
said radio network controller instructs said mobile stations to set a dedicated pilot channel as reference phase information; and
said mobile stations set the dedicated pilot channel as said reference phase information in accordance with the instructions from said radio network controller and use said dedicated pilot channel as said reference phase information to demodulate data that are transmitted in from said base station.

14. A mobile communication system comprising:
mobile stations,
a base station that transmits data to and receives data from said mobile stations by means of an adaptive antenna having antenna beams for each of said mobile stations; and
a radio network controller for controlling radio links of said mobile stations;
wherein
said base station reports to said radio network controller that said base station is applying an adaptive antenna;
said radio network controller instructs said mobile stations to set a dedicated pilot channel as reference phase information; and
said mobile stations set said dedicated pilot channel as said reference phase information in accordance with the instructions from said radio network controller and use said dedicated pilot channel as said reference phase information to demodulate data that are transmitted in from said base station.

15. A base station for transmitting data to and receiving data from mobile stations by means of an adaptive antenna having a plurality of antenna beams; wherein:
said base station submits a request to a radio network controller that controls radio links of said mobile stations for common pilot channels transmitted for each of said plurality of antenna beams for use as reference phase information, and uses the antenna beams that transmits the common pilot channels reported from said radio network controller to transmit and receive data.

16. A base station according to claim 15, wherein said base station:
reports to said radio network controller the number of said plurality of antenna beams;
selects from among the common pilot channels reported from said radio network controller for each of said antenna beams the optimum common pilot channel for transmitting data to and receiving data from a mobile station; and
both transmits data to said mobile station by the same antenna beam as the antenna beam that transmits this common pilot channel and reports this common pilot channel to said mobile station by way of said radio network controller.

17. A base station according to claim 15, wherein said base station:
detects the reception timing of said common pilot channel that is optimum for said mobile station based on the position of said mobile station; and
both transmits data to said mobile station by the same antenna beam as the antenna beam that transmits at the reception timing and reports the reception timing to said mobile station by way of said radio network controller.

18. A base station according to claim 15, wherein said base station:
transmits data to said mobile station by the same antenna beams as the antenna beams that are transmitting a plurality of common pilot channels that have been reported from said radio network controller;
and when the common pilot channel having the best reception quality among said plurality of common pilot channels transmitted from said base station is reported from said mobile station, uses the antenna beam that transmits the common pilot channel that was reported to transmit data to said mobile station.

19. A base station that transmits data to and receives data from mobile stations by means of an adaptive antenna having an antenna beam for each of said mobile stations; wherein:
said base station submits a request to a radio network controller that controls radio links of said mobile stations for common pilot channels transmitted on each of said antenna beams for use as reference phase information; and
uses the antenna beam that transmits the common pilot channels reported from said radio network controller to transmit and receive data.

20. A radio network controller for controlling radio links of mobile stations that transmit data to and receive data from a base station provided with an adaptive antenna having a plurality of antenna beams by means of said adaptive antenna;
wherein when a request is submitted from said base station for common pilot channels that are transmitted on each of said plurality of antenna beam for use as reference phase information, said radio network controller sets said common pilot channels and reports these common pilot channels to said base station and said mobile stations.

21. A radio network controller according to claim 20, wherein when the number of said antenna beams is reported from said base station, said radio network controller assigns a number of said common pilot channels equal to the number of said antenna beams that was reported and reports these common pilot channels to said base station.

22. A radio network controller for controlling radio links of mobile station that transmit data to and receive data from a base station provided with an adaptive antenna having a antenna beams for each mobile station by means of said adaptive antenna;
wherein when a request is submitted from said base station for common pilot channels that are transmitted on each of antenna beams for each said mobile station for use as reference phase information, said radio network controller sets common pilot channels for each said mobile station and reports these common pilot channels to said base station and said mobile stations.

23. A radio network controller for controlling radio links of mobile stations that transmit data to and receive data from a base station provided with an adaptive antenna having a plurality of antenna beams by means of said adaptive antenna;
wherein when said base station reports that said base station is applying said adaptive antenna, said radio network controller instructs said mobile station to set a dedicated pilot channel as reference phase information.

24. A radio network controller for controlling radio links of mobile stations that transmit data to and receive data from a base station that is provided with an adaptive antenna having an antenna beam for each of said mobile stations by means of said adaptive antenna;
wherein when said base station reports that said base station is applying said adaptive antenna, said radio network controller instructs said mobile station to set a dedicated pilot channel as reference phase information.

25. A program for causing a computer to execute processes of:
in a base station that transmits data to and receives data from mobile stations by means of an adaptive antenna having a plurality of antenna beams, submitting a request to a radio network controller that controls radio links of said mobile stations for common pilot channels transmitted on each of said plurality of antenna beams for use as reference phase information; and
using the antenna beam that transmits the common pilot channels reported from said radio network controller to transmit and receive data.

26. A program according to claim 25 for causing a computer to execute processes of:
reporting the number of said plurality of antenna beams to said radio network controller;
selecting from among the common pilot channels of each said antenna beam reported from said radio network controller the optimum common pilot channel for a mobile station that transmits and receives data; and
both transmitting data to said mobile station by the same antenna beam as the antenna beam that transmits the common pilot channel and reporting the common pilot channel to said mobile station by way of said radio network controller.

27. A program for causing a computer to execute processes of:
in a base station that transmits data to and receives data from mobile stations by means of an adaptive antenna having an antenna beam for each of said mobile stations, submitting a request to a radio network controller that controls radio links of said mobile stations for common pilot channels that are transmitted on each of said antenna beams for use as reference phase information; and
using the antenna beam that transmits the common pilot channel reported from said radio network controller to transmit and receive data.

28. A program for causing a computer to execute processes of:
in a radio network controller that controls radio links of mobile stations that transmit data to and receive data from a base station provided with an adaptive antenna having a plurality of antenna beams by means of said adaptive antenna, when a request is submitted from said base station for common pilot channels that are transmitted on each of said plurality of antenna beams for use as reference phase information, assigning said common pilot channels; and
reporting the common pilot channels to said base station and said mobile stations.

29. A program according to claim 28 for causing a computer to execute processes of:
when the number of said antenna beams is reported from said base station, assigning a number of said common pilot channels equal to the number of said antenna beams that was reported; and
reporting these common pilot channel to said base station.
